# EUROPEAN PATENT APPLICATION

(11) **EP 4 098 442 A1**
(43) Date of publication of application: **07.12.2022**
(21) Application number: 22382489.7
(22) Date of filing: 20.05.2022
(51) Int. Cl.: B32B 41/00, B60R 13/10

(54) **TENSIONING DEVICE FOR LICENSE PLATE LAMINATING MACHINE**

(30) Priority: 03.06.2021 ES 202130507
(71) Applicant: INDUSTRIAS SAMAR'T, S.A., 17600 Figueres (Girona) (ES)
(72) Inventor: SANCHEZ CASADEVALL, Enrique, 17600 Figueres (Girona) (ES)
(74) Representative: Munoz Garcia, Antonio

(57) **Abstract**

TENSIONING DEVICE FOR LICENSE PLATE LAMINATING MACHINE, applicable for its inclusion in an acrylic license plate laminating machine (2), made up of at least a thermoplastic part (3) and an adhesive flexible film (4) by pressing it through laminating rollers (5), comprising: a freely rotating tensioning roller (10), and a fastening support (11), in which the tensioning roller (10) is inserted, which is incorporated into the machine (2) so that the tensioning roller (10) is parallel behind the laminating rollers (5), such that the upper and lower part of its surface is at a different height than the tangential space between the two laminating rollers (5), through which the elements of the already laminated plate (3, 4) emerge, causing a deformation of them when being pushed and forced to slide on said surface of the tensioning roller (10).

## Description

### OBJECT OF THE INVENTION

The invention, as expressed in the title of this specification, refers to a tensioning device for a license plate laminating machine that provides, to the function for which it is intended, advantages and features, which are described in detail later, which represent an improvement on the current state of the art.

More specifically, the object of the invention focuses on a device that, essentially consisting of a roller and a support, is especially intended for its incorporation, as part of it or as an accessory element, in a license plate laminating machine, particularly acrylic license plates, after the laminating rollers of it, in order to provide a tensioning effect among the materials that the plate comprises by deformation of them after lamination, an effect that, in addition to facilitating the adhesion among said materials, made up of at least one acrylic piece and a reflective film, achieves a totally uniform adhesion between them.

### FIELD OF APPLICATION OF THE INVENTION

The field of application of the present invention falls within the sector of the industry dedicated to the manufacture of license plates, focusing more specifically on the field of manufacturing license plate laminating machines and accessories for them.

### BACKGROUND OF THE INVENTION

License plate laminating machines are known on the market, in particular, acrylic license plates such as the one described in patent ES2677369B1, whose owner is the applicant of the present invention.

Said machines essentially comprise a body with an upper surface to place the elements to be laminated, consisting of at least an acrylic piece and an adhesive reflective film, and two laminating rollers, which can be driven by a crank or a small electric motor, as well as fastening and guiding means that immobilize the reflective film centered with respect to the acrylic piece and keep it in place during lamination, which occurs by passing said elements between the laminating rollers, for which said rollers, located transversely at one end of the upper surface of the machine, are arranged facing each other one on top of the other and in such a way that, when driven, they rotate in opposite directions pressing together the thermoplastic material and the flexible adhesive film that make up the elements to laminate to cause adhesion between both when passing through said rollers.

The problem with these machines is given by the fact that, given that the acrylic piece that forms the base of the plate to be laminated must have a thickness of several millimeters, normally about three millimeters, it is necessary that there is a sufficient space between the two laminating rollers so that said plate and the film to be laminated can be inserted through. However, said space, although it is already narrow enough for being pressure between the rollers and the elements to be laminated, to achieve adhesion between both by means of the existing adhesive layer in the reflective film on the surface of the acrylic thermoplastic piece, it is not a narrow space as would be desirable to achieve uniform adhesion, since the space requirement to accommodate the thickness of the plate prevents it and, consequently, the pressure exerted by the laminating rollers is not as great as it would be undesirable and incorrect adhesions occur that cause air and dust to enter between the laminated elements, which, in turn, results in a lower quality product than would be desirable.

The objective of the present invention is therefore the development of an accessory device that allows avoiding said problem by coupling it to the rolling machine to ensure tensioning of the laminated elements.

On the other hand, and as a reference to the current state of the art, it should be noted that, at least by the applicant, the existence of any other tensioning device for a license plate laminating machine, or any other invention with a similar application, is unknown, having some technical and structural characteristics equal or similar to those presented by the one claimed here.

### DISCLOSURE OF THE INVENTION

The tensioning device for a license plate laminating machine that the invention proposes is an ideal solution for the objective described above, the characterizing details that make it possible and that conveniently distinguish it being included in the final claims that accompany the present description.

What the invention proposes, as noted above, is especially intended for inclusion in a license plate laminating machine, particularly an acrylic license plate laminating machine, incorporated behind the laminating rollers of the machine, for providing a tensioning effect between the materials that the plate comprises, made up of at least a thermoplastic acrylic piece and an adhesive reflective film, by deforming them after lamination, an effect that facilitates the adhesion between said materials while at the same time achieves a totally uniform adhesion between them.

To this end, and more specifically, the device object of the present invention is configured, essentially, from a tensioning roller that, inserted in a support that allows the free rotation of it, is incorporated in the machine parallel to the laminating rollers of it, at the exit of the elements to be laminated, and arranged so that the surface of this tensioning roller is at a different height than the tangential space between the laminating rollers, and through which the already rolled elements of the plate emerge, causing a deformation of it when pushed, by the driving of the laminating rollers outside of them, and forced to slide on said surface of the tensioning roller, deformation that, in turn, causes a controlled tension in the plastic material of the acrylic piece and in the adhesive flexible film, which not only facilitates greater adhesion between the two materials, but also due to the effect of tension and elasticity of the reflective sheet, achieves a totally uniform adhesion.

Preferably, the tensioning roller is incorporated in the machine so that its surface is located above the tangential space of the laminating rollers, so that the laminated elements emerging from them are tensioned from below and forced to deform upwardly, applying the pressure of the tensioning roller on the adhesive flexible film that is normally incorporated at the bottom of the acrylic piece, which is usually transparent.

However, in an alternative embodiment, the tensioning roller is incorporated in the machine so that its surface is located below the tangential space of the laminating rollers, so that the laminated elements that emerge from them are tensioned from above and forced to deform downwardly.

Preferably, the tensioning roller is covered on its surface with a soft material to prevent friction that could damage the material.

Optionally, the tensioning roller of the device is adjustable in height, to be able to modify its position with respect to the tangential space of the rolling rollers and to be able to place it above or below if desired, depending on the type of plate to be rolled or the needs of each case. To this end, preferably, the support in which the roller is incorporated has adjustable fixing means.

On the other hand, in a preferred embodiment, the tensioning device of the invention is made up of an inseparable part of the machine that has been incorporated into it during its own manufacture.

And, in an alternative embodiment, the tensioning device of the invention is made up of a removable accessory that can be incorporated at will into an existing laminating machine.

To this end, preferably, the fastening support in which the tensioning roller is incorporated has easily removable coupling means, formed by any known anchoring means, for example, screwed, being a preferred option the inclusion of magnetic coupling means that, advantageously, allow it to be coupled and uncoupled to any existing machine which, as usual, has a ferrometallic structure body.

### DESCRIPTION OF THE DRAWINGS

To complement the description that is being made and in order to help a better understanding of the features of the invention, a set of drawings is attached to this specification, as an integral part thereof, in which for illustrative and non-limiting character, the following has been represented:
Figure number 1.- Shows a perspective view of an exemplary embodiment of the tensioning device for a license plate laminating machine object of the invention incorporated into a laminating machine, showing its configuration and arrangement in said machine.
Figure number 2.- Shows an enlarged view of the part of the machine in which the device object of the invention is coupled, showing the parts and elements that it comprises, as well as their configuration and arrangement.

And figures number 3 and 4.- Show respective schematic representations of the two possible positions of the tensioning roller of the device with respect to the tangential space of the laminating rollers of the machine, above and below respectively.

### PREFERRED EMBODIMENT OF THE INVENTION

In view of the aforementioned figures, and according to the numbering adopted, it can be seen in them a non-limiting exemplary embodiment of the tensioning device for a license plate laminating machine of the invention, which includes what is indicated and described in detail below.

Thus, as can be seen in said figures, the device (1) of the invention, applicable for its inclusion in a machine (2) for laminating acrylic license plates, made up of at least a thermoplastic part (3) and an adhesive flexible film (4), by pressing it through laminating rollers (5), comprises:
- a freely rotating tensioning roller (10), and
- a fastening support (11), in which the tensioning roller (10) is inserted, which is incorporated into the machine (2) so that the tensioning roller (10) is parallel behind the laminating rollers (5), to the exit of the laminated elements (3, 4) of the plate, and arranged in such a way that the upper and lower part of the surface of the tensioning roller (10) is located at a different height than the tangential space between the two laminating rollers (5), through which the elements of the plate already laminated (3, 4) emerge, causing their deformation when pushed and forced to slide on said surface of the tensioning roller (10).

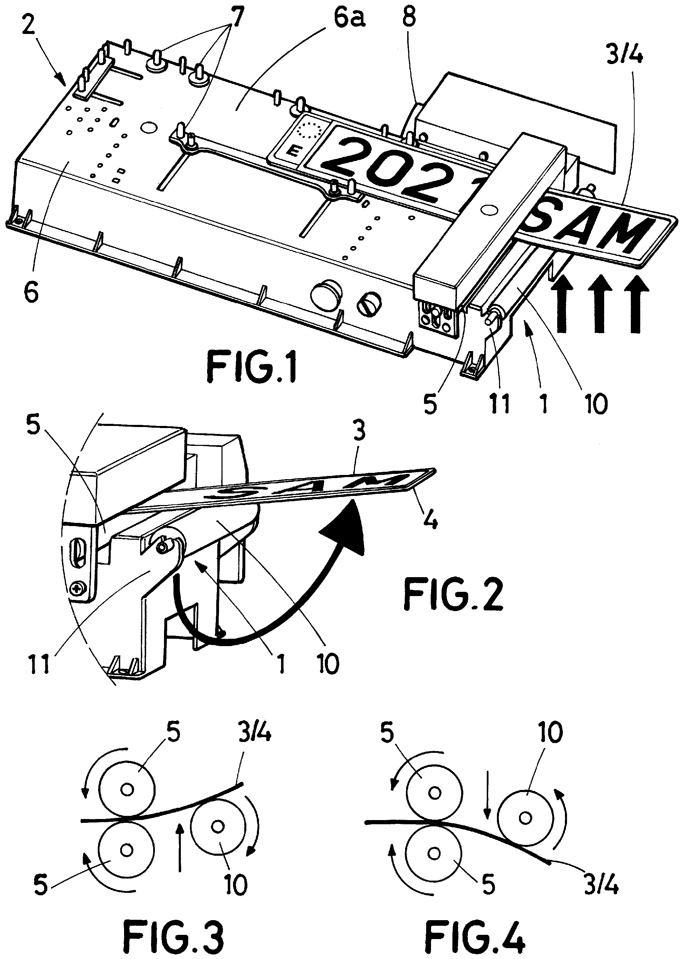

Preferably, the support (11) is incorporated in the machine (2) so that the upper part of the surface of the tensioning roller (10) is located above the tangential space of the laminating rollers (5), so that, as figures 1, 2 and 3 show, the laminated elements (3, 4) emerging through said tangential space between the laminating rollers (5) are tensioned by the tensioning roller (10) from below and forced to deform upwardly.

And, in an alternative embodiment, the support (11) is incorporated in the machine (2) so that the lower part of the surface of the tensioning roller (10) is located below the tangential space of the laminating rollers (5), so that, as can be seen in figure 4, the laminated elements (3, 4) that emerge through said tangential space between the laminating rollers (5) are tensioned by the tensioning roller (10) above and forced to deform downwardly.

Preferably, the tensioning roller (10) of the device (1) of the invention is covered on its surface with a soft material, such as rubber or similar, to avoid friction that could damage the material, although this does not imply a limitation, since it can also be hard.

Optionally, the tensioning roller (10) of the device is adjustable in height, in order to be able to modify its position with respect to the tangential space of the laminating rollers (5). To this end, preferably, the support (11) in which the tensioning roller (10) is incorporated comprises adjustable fixing means (not shown in the figures).

Finally, it should be noted that, in one embodiment, the tensioning device (1) is an inseparable part of the machine (2) that has been incorporated into it during its own manufacture.

And, in another embodiment, the tensioning device (1) is an independent accessory that can be incorporated into an existing laminating machine (2) through anchoring means, preferably removable anchoring means.

In a preferred embodiment, as shown in figures 1 and 2, the laminating machine (2) is formed from a prismatic body (6) with a rectangular upper surface (6a) that has guiding elements (7) to center the elements (3, 4) to be laminated and has two laminating rollers (5) installed transversely near one end of said rectangular surface (6a) associated at one end with an driving element (8). And, for its part, the device (1) of the invention is coupled, through the fastening support (11), to the side wall of the body (6), on the side where the rollers (5) are incorporated, so that the tensioning roller (10) is placed parallel behind the laminating rollers (5), leaving the upper part of its surface somewhat above the existing tangential space between the laminating rollers (5) through which the laminated elements (3, 4) emerge.

Having sufficiently described the nature of the present invention, as well as the way of putting it into practice, it is not considered necessary to make its explanation more extensive so that any person skilled in the art understands its scope and the advantages derived from it, stating that, within its essentiality, it may be put into practice in other embodiments that differ in detail from the one indicated by way of example, and to which it will also reach the protection that is sought as long as its fundamental principle is not altered, changed or modified.

## Claims

1. TENSIONING DEVICE FOR LICENSE PLATE LAMINATING MACHINE that, applicable for its inclusion in an acrylic license plate laminating machine (2), made up of at least a thermoplastic part (3) and an adhesive flexible film (4), by pressing it through laminating rollers (5), is **characterized in that** it comprises:
- a freely rotating tensioning roller (10), and
- a fastening support (11), in which the tensioning roller (10) is inserted, which is incorporated into the machine (2) so that the tensioning roller (10) is parallel behind the laminating rollers (5), to the exit of the laminated elements (3, 4) of the plate, and arranged in such a way that the upper and lower part of the surface of said tensioning roller (10) is located at a different height than the tangential space between the two laminating rollers (5), through which the elements of the already laminated plate (3, 4) emerge, causing their deformation when pushed and forced to slide on said surface of the tensioning roller (10).

2. TENSIONING DEVICE FOR LICENSE PLATE LAMINATING MACHINE, according to claim 1, **characterized in that** the support (11) is incorporated in the machine (2) so that the upper part of the surface of the tensioning roller (10) is located above the tangential space of the laminating rollers (5), so that the laminated elements (3, 4) emerging through said tangential space between the laminating rollers (5) are tensioned by the tensioning roller (10) below and forced to deform upwardly.

3. TENSIONING DEVICE FOR LICENSE PLATE LAMINATING MACHINE, according to claim 1, **characterized in that** the support (11) is incorporated in the machine (2) so that the lower part of the surface of the tensioning roller (10) is located below the tangential space of the rolling rollers (5), so that the laminated elements (3, 4) emerging through said tangential space between the laminating rollers (5) are tensioned by the tensioning roller (10) above and forced to deform downwardly.

4. TENSIONING DEVICE FOR LICENSE PLATE LAMINATING MACHINE, according to any of the previous claims, **characterized in that** the tensioning roller (10) is covered on its surface with a soft material, to avoid friction that could damage the material.

5. TENSIONING DEVICE FOR LICENSE PLATE LAMINATING MACHINE, according to claim 1, **characterized in that** the tensioning roller (10) is adjustable in height, in order to modify its position with respect to the tangential space of the laminating rollers (5).

6. TENSIONING DEVICE FOR LICENSE PLATE LAMINATING MACHINE, according to claim 5, **characterized in that** the fastening support (11) in which the tensioning roller (10) is incorporated comprises adjustable fixing means.

7. TENSIONING DEVICE FOR LICENSE PLATE LAMINATING MACHINE, according to any of the previous claims, **characterized in that** it is an inseparable part of the machine (2) that has been incorporated into it during its own manufacture.

8. TENSIONING DEVICE FOR LICENSE PLATE LAMINATING MACHINE, according to any of claims 1 to 6, **characterized in that** it is an independent accessory that can be incorporated into an existing laminating machine (2) through anchoring means.
